# EUROPEAN PATENT SPECIFICATION

(11) **EP 4 146 474 B1**
(45) Date of publication and mention of the grant of the patent: **07.02.2024**
(21) Application number: 21729933.8
(22) Date of filing: 06.05.2021
(51) Int. Cl.: B33Y 50/02, B33Y 10/00, B29C 64/118, B29C 64/393, B29C 70/38, G06F 30/20, B64C 1/00, B64C 3/20

(54) **METHOD OF REALIZATION OF AN ITEM FOR AERONAUTICAL APPLICATION WITH HYBRID COMPOSITE MATERIALS BY MEANS OF ADDITIVE TECHNOLOGY**
VERFAHREN ZUR REALISIERUNG EINES ARTIKELS ZUR AERONAUTISCHEN ANWENDUNG MIT HYBRIDEN VERBUNDSTOFFMATERIALIEN MITTELS ADDITIVTECHNOLOGIE
PROCÉDÉ DE RÉALISATION D'UN ARTICLE POUR APPLICATION AÉRONAUTIQUE MUNI DE MATÉRIAUX COMPOSITES HYBRIDES AU MOYEN D'UNE TECHNOLOGIE ADDITIVE

(30) Priority: 06.05.2020 IT 202000010120
(43) Date of publication of application: 15.03.2023
(73) Proprietor: Leonardo S.p.a., 00195 Roma (IT)
(72) Inventor: ACERRA, Francesco, 10146 Torino (IT); DE POMPEIS, Fabio, 10146 Torino (IT); IANNUZZO, Generoso, 10146 Torino (IT)
(74) Representative: Studio Torta S.p.A.
(86) International application number: PCT/IB2021/053839
(87) International publication number: WO 2021/224844

(56) References cited:
- EP-A1- 3 736 108
- US-A1- 2017 259 502

## Description

### CROSS-REFERENCE TO RELATED APPLICATIONS

This patent application claims priority from Italian patent application no. 102020000010120 filed on 06/05/2020.

### TECHNICAL FIELD

The present invention relates to a method of realization of an aeronautical item with hybrid composite materials by means of additive technology.

### BACKGROUND ART

As is known, additive technology (**Additive Manufacturing**) is a process of depositing and joining materials to realize objects from computerized 3D models.

Additive technology uses data processed by CAD (Computer Aided Design) software or from scanners and describing an object to be made to direct a deposition device to deposit material, layer-by-layer, thereby creating precise geometric shapes. As the name suggests, additive technology adds material to create an object. Conversely, when creating an object by conventional means it is often necessary to remove the excess material by milling, machining, carving, shaping or other means.

Additive technology is sometimes described as "three-dimensional printing," which is actually a subcategory of additive technology.

### SUMMARY OF THE INVENTION

***It is an object of the present invention to develop a method for manufacturing an item made of hybrid composite material by additive technology, which is particularly suitable for aeronautical applications**.*

"Hybrid composite material" is intended to mean a thermoplastic polymer reinforced with chopped fibers (generally made of carbon) and continuous fibers of different types (carbon, glass, aramid, etc.). Several relevant patents relating to Additive Manufacturing technology already exist in the aeronautical field. However, the present proposal differs therefrom in terms of method, materials, and applications.

A brief description of the above-mentioned patents is given below:
1.Boeing's patent EP3103568B1 describes a method of additive manufacturing of an item for aeronautical application, which provides for the use of hydrogenated titanium in the formation of an object by additive manufacturing, with the object having a first microstructure. The method comprises heat treatment of the hydrogenated titanium and, once the shape of the object is completed, dehydrogenation thereof. The dehydrogenated object takes on a second microstructure different from the first.
2. Patent application CN105252003A describes an additive manufacturing method for aircraft spar components.
3. US 2017/259502 describes an additive manufacturing apparatus having a three-dimensional movement system.

The invention is defined by a method of realization of an aeronautical item with hybrid composite materials by means of additive technology as claimed in claim 1.

### BRIEF DESCRIPTION OF THE DRAWINGS

The invention will be described in the attached drawings which represent non-limiting examples.
Figures 1 and 2 schematically show a device which implements the method of the present invention.
Figure 3 is a schematic top view of a layer of material deposited by the method of the present invention.

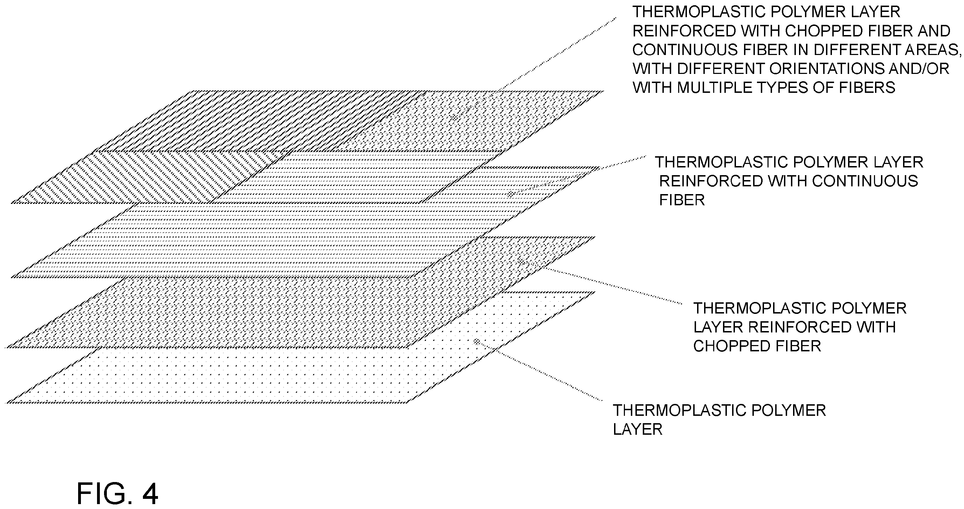

Figure 4 schematically shows the heterogeneity of the various layers that can be obtained by means of the method of the present invention, using materials consisting of:
   - resin alone,
   - resin reinforced with chopped fiber,
   - resin reinforced with continuous fibers,
   - resin reinforced with chopped fiber and further reinforced with continuous fibers.

The continuous fibers can be of different types, laid in different areas and with different orientations within the same layer.

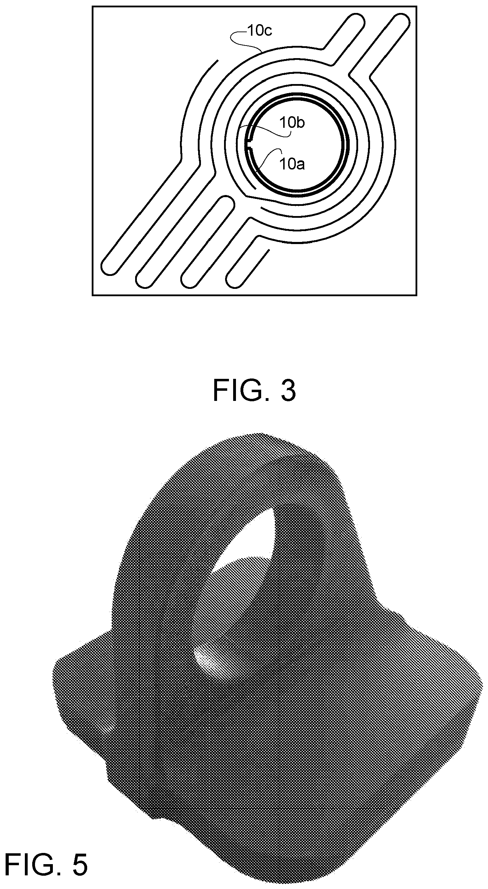

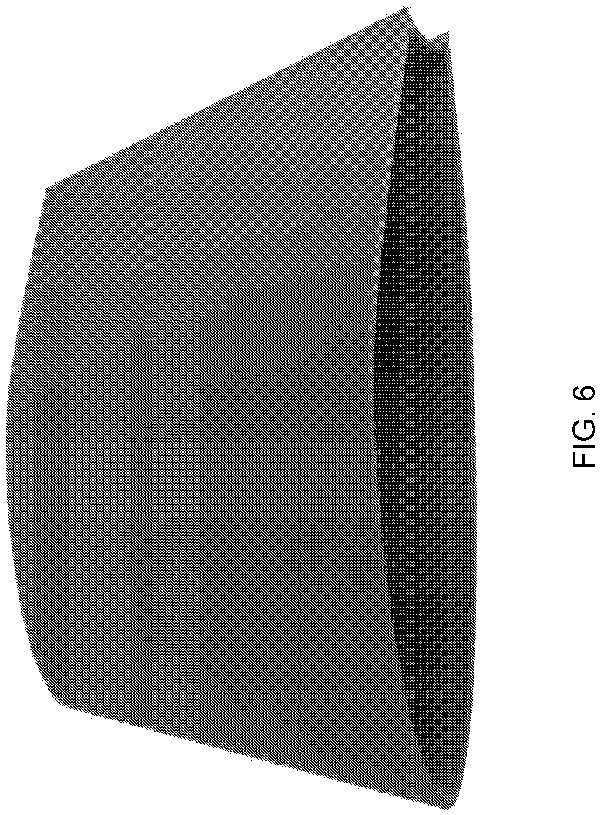

Figures 5 and 6 show, by way of example, objects made according to the method of the present invention.

### DESCRIPTION OF THE EMBODIMENT

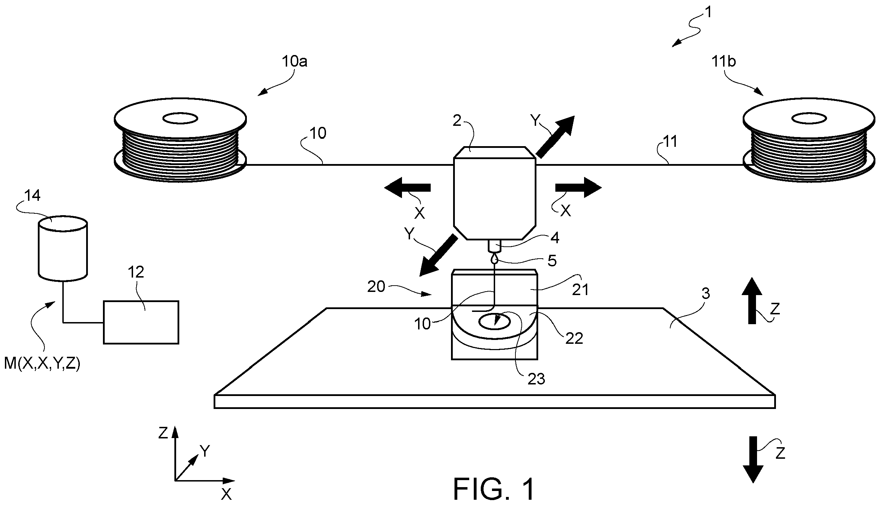

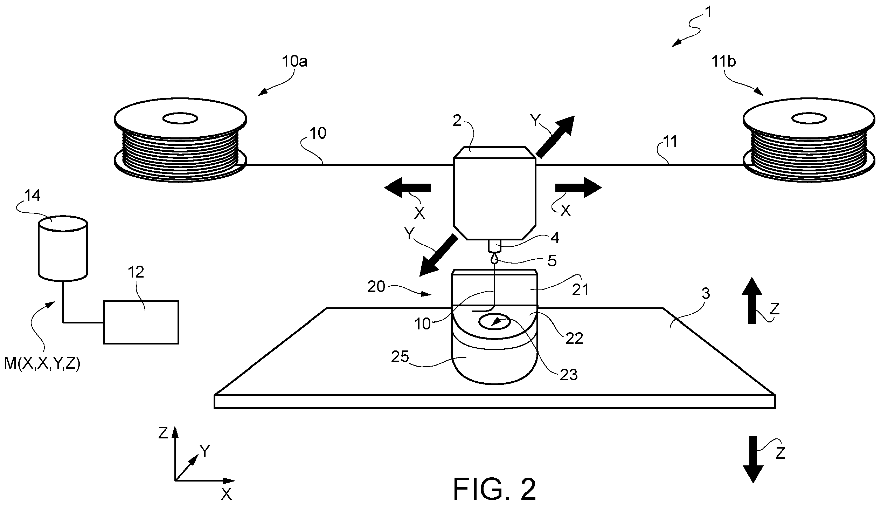

With reference to Figures 1 and 2, the reference numeral 1 designates a deposition device for manufacturing an item with hybrid composite materials for aeronautical application by means of additive technology.

The deposition device 1, shown schematically, comprises a movable deposition head 2, which can move in opposite directions along perpendicular directions X and Y in a two-dimensional space XY, under the thrust of actuators (not shown) carried by a known support structure (not shown for simplicity).

The deposition device 1 is configured to produce an object on a support surface 3, which can move in opposite directions along a direction Z orthogonal to the directions X and Y.

The deposition head 2 is provided with an extruder 4 suitable for extruding a mixture 5 of polymeric material and chopped reinforcing fibers. This mixture 5 is extruded as a plastic material and is subsequently cured by cooling and crosslinking.

Among the thermoplastic resins that can be used, we point out polyetherimide (also referred to as PEI) which, as is known, is a high-performance amorphous technopolymer introduced in 1982. Polyetherimide is easy to extrude and model. It has excellent chemical resistance and high stability and is therefore suitable for technical applications.

Other examples of polymeric materials that can be used are: PPS (**polyphenylene sulfide**), PEEK (Polyether ether ketone), PEK (Polyetherketone), PAEK (**polyaryletherketone**), etc.

The continuous reinforcing fibers can be of the synthetic and natural type.

The most widely used of the synthetic reinforcing fibers are carbon, glass and aramid fibers.

Natural reinforcing fibers include, for example, hemp and flax fibers.

Chopped fibers are generally of the synthetic type, specifically made of carbon.

The deposition head 2 is also suitable to deposit at least one continuous fiber 10 (made of carbon, glass, aramid), generally soaked in the same polymer used for the matrix. Typically, the fiber 10 is delivered by the same extruder 4, just like the resin and chopped fiber mixture 5.

The deposition head 2 can also deposit a further continuous fiber 11 made of a material different from that of the fiber 10, also delivered by the extruder 4.

For example, the fiber 10 may be a carbon fiber and the fiber 11 may be a glass fiber.

The fibers 10 and 11 are housed on the supports 10-a and 11-a, which are schematized as spools in Figures 1 and 2.

The movement of the head 2 and the support surface 3 is controlled by an electronic control unit 12, which also controls the flow of the delivered mixture 5 and the delivery of the continuous fibers 10 and 11.

The electronic unit 12 communicates with a database 14 in which a mathematical model (M(x,y,x)) of an item 20 to be created is stored. The mathematical model (M(x,y,x)) defines, in a reference system, the shape and dimensions of the item and includes the information associated with the areas of the item that must be reinforced according to the level of stress.

The item 20, shown by way of example in Figures 1 and 2, is a ring fitting consisting of a rectangular base wall 21 and a ring portion 22 defining a through hole 23. The ring portion 22 must be structurally reinforced around the through hole 23.

It is clear, however, that any item can be made, for example, a wing profile, an aircraft control surface, etc.

According to the present method, the following steps are carried out:
providing the electronic control unit 12 with the mathematical model (M(x,y,x)) of the item;
depositing, by means of additive technology, the mixture 5 of polymeric material and chopped reinforcing fibers according to the mathematical model, thereby forming the first layer of the item;
depositing on the first layer one or more continuous fibers 10 and/or 11 which extend in correspondence with the areas that must be reinforced according to the level of stress.

Typically, as provided by the additive technology, a plurality of superimposed layers can be deposited, in which the continuous fibers 10 and/or 11 can be arranged in one or more layers. In this way, the item 20 is made with a layered structure, in which the continuous fibers 10 and/or 11 are incorporated between the adjacent layers, generally consisting of resin and chopped fiber.

Thus, the outer layers (the skin) of the layered structure are devoid of the continuous fibers, whereas the inner layers may be provided with the continuous fibers 10 and/or 11 incorporated therein.

The fibers 10 and/or 11 are oriented along paths defined by the directions of the loads or in any case in the directions provided in the design phase.

In this way, the fibers 10 and/or 11 are only arranged in the portions of the item where their presence is necessary; thus, both the weight of the item and the costs are reduced since, as stated above, the use of the fibers 10 and/or 11 is optimized.

Figure 2 also shows a portion of sacrificial material 25, again deposited by the extruder 4, having the function of supporting the item 20. The sacrificial material is subsequently removed and is therefore an inexpensive material (for example soluble) which can be easily removed.

This method allows a plurality of superimposed layers to be formed in sequence, each of which can be provided with the supporting fibers 10 and/or 11, thus enabling complex geometries.

The method is also very versatile and flexible, since fibers of a different nature can be used.

Figure 3 shows a strategy of deposition of the continuous fiber used to produce the item 20 in a plane orthogonal to the axis of the hole 23.

As can be seen, the inner portion of the hole 23 is surrounded by a first continuous fiber 10a, which extends along a double inner circular path, and by a second continuous fiber 10b, which extends along a double outer circular path. A third continuous fiber 10c extends along a serpentine path and surrounds the first and second paths.

## Claims

1. A method of realization of an aeronautical item with hybrid composite materials by means of additive technology comprising the steps of:
design of the product by means of a three-dimensional mathematical model (M(x,y,z)) which defines, in a reference system, the shape and dimensions and includes the information associated with the areas of the item that must be reinforced according to the level of stress;
deposition, by means of extruder (4) suitable for extruding a mixture (5) of polymeric material and chopped reinforcing fibers performing additive technology of a matrix according to the mathematical model;
**characterized by** the deposition of one or more continuous fibers (10) along articulated paths in correspondence with the areas that must be reinforced according to the level of stress;
said continuous fiber (10) being soaked in the mixture (5) used for the matrix;
the method simultaneously provides for the deposition of both the mixture of polymeric material and chopped fiber and the deposition of the continuous fibers (10) after the deposition of the mixture.

2. The method according to claim 1, which comprises the step of depositing a plurality of superimposed layers to form the item, with the continuous fibers (10) arranged in one or more layers.

3. The method according to claim 2, wherein the continuous fibers (10) are oriented along paths defined by the directions of the loads or in any case in the directions provided in the design phase.

4. The method according to claim 2 or 3, wherein at least two reinforcing fibers (10) made of different materials are deposited on each layer.

5. The method according to any one of the preceding claims, wherein the reinforcing fibers (10) are of the synthetic type, preferably carbon, glass, aramid, and/or natural.

## Patentansprüche

1. Verfahren zum Realisieren eines Elements für die Luftfahrt mit hybriden Verbundmaterialien mittels additiver Technologie, das die folgenden Schritte umfasst:
Entwerfen des Produkts mittels eines dreidimensionalen mathematischen Modells (M(x, y, z)), das in einem Referenzsystem die Form und die Abmessungen definiert und die Informationen, die den Bereichen des Elements, die entsprechend der Spannungshöhe verstärkt werden müssen, zugeordnet sind, enthält; und
Abscheiden mittels eines Extruders (4), der zum Extrudieren einer Mischung (5) aus Polymermaterial und kurzen Verstärkungsfasern geeignet ist, um eine additive Technologie einer Matrix entsprechend dem mathematischen Modell auszuführen;
**gekennzeichnet durch**
Abscheiden einer oder mehrerer Endlosfasern (10) längs geknickter Pfade entsprechend den Bereichen, die entsprechend der Spannungshöhe verstärkt werden müssen;
wobei die Endlosfaser (10) mit der Mischung (5), die für die Matrix verwendet wird, getränkt ist;
wobei das Verfahren gleichzeitig für das Abscheiden der Mischung aus Polymermaterial und Kurzfasern und für das Abscheiden der Endlosfasern (10) nach dem Abscheiden der Mischung vorgesehen ist.

2. Verfahren nach Anspruch 1, das den Schritt des Abscheidens mehrerer übereinanderliegender Lagen umfasst, um das Element zu bilden, wobei die Endlosfasern (10) in einer oder mehreren Lagen angeordnet sind.

3. Verfahren nach Anspruch 2, wobei die Endlosfasern (10) längs Pfaden, die durch die Belastungsrichtungen definiert sind, oder in jedem Fall in den Richtungen, die in der Entwurfsphase vorgesehen wurden, orientiert sind.

4. Verfahren nach Anspruch 2 oder 3, wobei wenigstens zwei Verstärkungsfasern (10), die aus unterschiedlichen Materialien hergestellt sind, auf jeder Lage abgeschieden werden.

5. Verfahren nach einem der vorhergehenden Ansprüche, wobei die Verstärkungsfasern (10) vom synthetischen Typ, vorzugsweise Kohlenstoff, Glas, Aramid, und/oder natürlich sind.

## Revendications

1. Procédé de réalisation d'un article aéronautique avec des matériaux composites hybrides au moyen d'une technologie additive, comprenant les étapes de :
conception du produit au moyen d'un modèle mathématique tridimensionnel (M(x,y,z)) qui définit, dans un système de référence, la forme et les dimensions et contient les informations associées aux zones de l'article qui doivent être renforcées en fonction du niveau de contrainte ;
déposition, au moyen d'une extrudeuse (4) convenant pour extruder un mélange (5) de matériau polymère et de fibres de renforcement courtes, en réalisant une technologie additive d'une matrice en fonction du modèle mathématique ;
**caractérisé par** la déposition d'une ou plusieurs fibres continues (10) le long de trajets articulés en correspondance avec les zones qui doivent être renforcées en fonction du niveau de contrainte ;
ladite fibre continue (10) étant trempée dans le mélange (5) utilisé pour la matrice ;
lequel procédé réalise simultanément la déposition à la fois du mélange de matériau polymère et des fibres courtes et la déposition des fibres continues (10) après la déposition du mélange.

2. Procédé selon la revendication 1, qui comprend l'étape de déposition d'une pluralité de couches superposées pour former l'article, les fibres continues (10) étant disposées en une ou plusieurs couches.

3. Procédé selon la revendication 2, dans lequel les fibres continues (10) sont orientées le long de trajets définis par les directions des charges ou, dans tous les cas, dans les directions fournies lors de la phase de conception.

4. Procédé selon la revendication 2 ou 3, dans lequel au moins deux fibres de renforcement (10) faites de matériaux différents sont déposées sur chaque couche.

5. Procédé selon l'une quelconque des revendications précédentes, dans lequel les fibres de renforcement (10) sont de type synthétique, de préférence en carbone, verre, aramide, et/ou naturelles.
